# EUROPEAN PATENT SPECIFICATION

(11) **EP 4 553 602 B1**
(45) Date of publication and mention of the grant of the patent: **30.09.2026**
(21) Application number: 24209769.9
(22) Date of filing: 30.10.2024
(51) Int. Cl.: G05D 1/633, G05D 1/243, G06V 20/58, G06V 40/10

(54) **CONTROL SYSTEM, CONTROL METHOD, AND STORAGE MEDIUM**
STEUERUNGSSYSTEM, STEUERUNGSVERFAHREN UND SPEICHERMEDIUM
SYSTÈME DE COMMANDE, PROCÉDÉ DE COMMANDE ET SUPPORT D'INFORMATIONS

(30) Priority: 10.11.2023 JP 2023192105
(43) Date of publication of application: 14.05.2025
(73) Proprietor: HONDA MOTOR CO., LTD., Tokyo 105-8404 (JP)
(72) Inventor: MATSUZAKI, Sango, Wako-shi, Saitama, 351-0193 (JP); KOMURO, Misa, Wako-shi, Saitama, 351-0193 (JP)
(74) Representative: Kiwit, Benedikt

(56) References cited:
- EP-B1- 2 065 775
- EP-B1- 2 595 025

## Description

### BACKGROUND

### Field of the Invention

The present invention relates to a control system, a control method, and a storage medium.

### Description of Related Art

Conventionally, robots that guide users to desired locations or transport luggage are known (for example, J P 2012- 111 011 A).

However, in the system described above, a stop position of a mobile object has not been fully considered.

EP 2 595 025 B1 discloses a control system that controls a mobile object comprising a detection unit and recognition unit according to the preamble of independent claim 1, as well as a control unit of the same which stops the mobile object in a stop position which conceivably is in a visual range if a traffic participant. EP 2 065 775 B1 discloses a mobile apparatus capable of moving or acting autonomously while flexibly avoiding contact with a moving object in accordance with various situations is primarily provided. In the case where a second safety condition is not satisfied because, e.g., a first target trajectory cannot be found, a second target trajectory causing a first spatial element to approach the boundary of an element passing region is searched for and determined. A robot autonomously approaches the boundary of the passable region in accordance with the second target trajectory determined as a provisional target trajectory, and stops at the position corresponding to the end point of the second target trajectory. Such movement of the robot along the second target trajectory increases the space, making it possible to prompt an object to move through the space.

The present invention has been made in consideration of these circumstances, and one of its objectives is to provide a control system, a control method, and a storage medium that can determine a stop position and perform avoidance control according to an environment.

### SUMMARY OF THE INVENTION

The control system, the control method, and the storage medium according to the present invention have adopted the following configuration.
(1): A control system according to one aspect of the present invention is a control system that controls a mobile object which is capable of autonomously moving in an area in which a pedestrian is able to move, comprising: a detection unit configured to detect objects around the mobile object, a recognition unit configured to recognize a traffic participant that is estimated to pass by the mobile object included in the objects and a stop position to which the mobile object is able to be evacuated on the basis of a result of the detection by the detection unit; and a control unit configured to stop the mobile object at the stop position so that the mobile object is included in a visual field range of the traffic participant when the traffic participant and the mobile object are estimated to pass by each other.
   Further in the control system according to the present invention, the control unit is configured to determine, when there are a plurality of traffic participants and a plurality of stop position candidates, a stop position candidate in which the mobile object is included in a visual field range of each of the plurality of traffic participants among the plurality of stop position candidates as a stop position, and stop the mobile object at the stop position.
(2): **In** the aspect of (1) described above, when the traffic participant and the mobile object are estimated to pass by each other, the control unit may be configured to determine the stop position candidate among the stop position candidates in which the mobile object is positioned at or near a center of the visual field range in a horizontal direction as the stop position.
(3): In the aspect of (1) described above, when the traffic participant and the mobile object are estimated to pass by each other, the control unit may be configured to determine the stop position candidate included among the stop position candidates corresponding to the visual field range in which the mobile object is not hidden by the objects and a larger portion of the mobile object is as the stop position.
(4): In the aspect of (1) described above, the control unit may be configured to: obtain, when the traffic participant and the mobile object are estimated to pass by each other, there is a plurality of traffic participants, and the mobile object is assumed to have stopped at each of the plurality of stop position candidates, an index for each of the plurality of traffic participants for each of the stop position candidates, based on a size of an area in which the mobile object is recognizable without being hidden by an object in the visual field range of each of the plurality of traffic participants for each of the stop position candidates; and determine a stop position candidate having the largest index among a plurality of indexes obtained by performing statistical processing on the indexes of the plurality of traffic participants for each of the plurality of stop position candidates as the stop position.
(5): In the aspect of (1) described above, when the traffic participant and the mobile object are estimated to pass by each other, the control unit is configured to determine the stop position on the basis of index information in which an index corresponding to a degree of deviation of a horizontal distance from a center of the visual field range in a horizontal direction is associated and a position of the mobile object in the horizontal direction, which is not hidden by the object corresponding to each of the plurality of stop position candidates in the visual field range.
(6): In the aspect of (5) described above, the index information may be set to have a lower index as a horizontal distance from the center of the visual field range in the horizontal direction increases, and the control unit may be configured to derive a sum of the indexes of the index information corresponding to the position of the mobile object in the horizontal direction with respect to each of the visual field ranges of a plurality of traffic participants, and determine the stop position by referring to each of the derived sums.
(7): In the aspect of any one of (1) to (6) described above, the control unit may be configured to stop the mobile object at a stop position so that the mobile object is included in the visual field range of the traffic participant on a narrow road where the mobile object needs to move in a width direction to avoid the traffic participant when passing by the traffic participant.
(8): In the aspect of any one of (1) to (6) described above, the control unit may be configured to move the mobile object in a direction opposite to a direction in which the traffic participant is present with respect to a width direction as the traffic participant approaches the mobile object after the mobile object is moved to the stop position or near the stop position.
(9): In the aspect of any one of (1) to (6) described above, the mobile object may be capable of autonomously moving in an area where vehicles cannot move and where pedestrians can move.
(10): A control method according to another aspect of the present invention includes, by a computer of a control system that controls a mobile object that is capable of autonomously moving in an area where pedestrians can move, recognizing, on the basis of a result of detection by a detection unit that detects objects around the mobile object, a traffic participant that is estimated to pass by the mobile object included in the objects and a stop position to which the mobile object is able to be evacuated, and stopping the mobile object at the stop position so that the mobile object is included in a visual field range of the traffic participant when the traffic participant and the mobile object are estimated to pass by each other. The method further comprises determining, when there are a plurality of traffic participants and a plurality of stop position candidates, a stop position candidate in which the mobile object is included in a visual field range of each of the plurality of traffic participants among the plurality of stop position candidates as a stop position, and stopping the mobile object at the stop position.
(11): A non-transitory computer readable storage medium according to still another aspect of the present invention has stored a program for causing a computer of a control system that controls a mobile object that is capable of autonomously moving in an area where pedestrians can move to execute processing of recognizing, on the basis of a result of detection by a detection unit that detects objects around the mobile object, a traffic participant that is estimated to pass by the mobile object included in the objects and a stop position to which the mobile object is able to be evacuated and processing of stopping the mobile object at the stop position so that the mobile object is included in a visual field range of the traffic participant when the traffic participant and the mobile object are estimated to pass by each other. The computer is further caused to execute processing of determining, when there are a plurality of traffic participants and a plurality of stop position candidates, a stop position candidate in which a mobile object is included in a visual field range of each of the plurality of traffic participants among the plurality of stop position candidates as a stop position, and stopping the mobile object at the stop position.

According to the aspects of (1) to (11), it is possible to determine a stop position according to an environment.

According to the aspect of (8), the control device moves the mobile object to the stop position or near the stop position, and then, as the traffic participant approaches the mobile object, moves the mobile object in a direction opposite to a direction in which the traffic participant is present with respect to the width direction, thereby controlling the mobile object so that it is easily recognized by the traffic participant and does not interfere with the traffic participant.

### BRIEF DESCRIPTION OF THE DRAWINGS

FIG. 1 is a diagram which shows an example of a configuration of a mobile object system including a mobile object.
FIG. 2 is a diagram for describing an example of a usage mode of the mobile object.
FIG. 3 is a diagram for describing a guidance mode.
FIG. 4 is a perspective view which shows the mobile object.
FIG. 5 is a diagram which shows an example of a functional configuration of the mobile object.
FIG. 6 is a diagram for describing an avoidance control.
FIG. 7 is a flowchart which shows an example of a flow of processing executed by a control device.
FIG. 8 is a diagram which shows an example of content of index information.
FIG. 9 is a diagram for describing an index (In) for deriving the index described above.
FIG. 10 is a diagram for describing a modified example 1.
FIG. 11 is a diagram which shows an example of index information of the modified example 1 including a cumulative index that is a cumulated index.
FIG. 12 is a diagram for describing index information of a modified example 3.
FIG. 13 is a diagram for describing processing of the modified example 3.

### DETAILED DESCRIPTION OF THE INVENTION

Hereinafter, an embodiment of a control system, a control method, and a storage medium of the present invention will be described with reference to the drawings. The control system of a mobile object of the present invention controls a driving device of the mobile object to move the mobile object. The mobile object in the present invention autonomously moves in an area in which a pedestrian walks, leading a leading subject and following the subject. The mobile object can move in an area in which a pedestrian can move, even if a vehicle (a car, a motorcycle, a light vehicle) cannot move. The area in which a pedestrian can move is a sidewalk, a public open space, a floor in a building, or the like, and may also include a roadway. In the following description, it is assumed that a person is not riding on the mobile object, but a person may ride on the mobile object. The leading subject is, for example, a pedestrian, but may also be a robot or an animal. For example, the mobile object moves a little ahead of an elderly user while heading toward a predetermined destination point, so that other pedestrians who may be an obstacle to a movement of the user do not get too close to the user (that is, it operates to make a way for the user). The user is not limited to the elderly, and may be a person who tends to have difficulty walking, a child, a person shopping at a supermarket, a patient moving around in a hospital, a pet taking a walk, or the like. In addition, the mobile object may predict a direction in which the user will move and autonomously move in front of the user at the same moving speed of the user, without the user necessarily needing to have determined a destination point in advance. Note that such an operation may not be performed all the time, but may be performed temporarily. For example, when the mobile object travels alongside the user or follows the user and detects a specific situation (for example, presence of an obstacle or traffic congestion) in a traveling direction of the user, the mobile object may temporarily lead the user by executing an algorithm of the present invention.

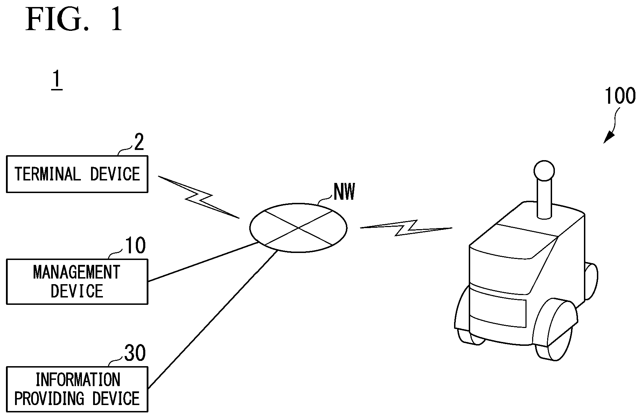

FIG. 1 is a diagram which shows an example of a configuration of a mobile object system 1 including a mobile object 100. The mobile object system ("control system") 1 includes, for example, one or more terminal devices 2, a management device 10, one or more imaging units 20, an information providing device 30, and one or more mobile objects 100. These communicate, for example, via a network NW. The network NW is, for example, any network such as a LAN, a WAN, or an Internet line. Some of functional constituents included in the information providing device 30 may be mounted on the mobile object 100, and some of the functional constituents included in the mobile object 100 may be mounted on the information providing device 30.

### [Terminal device]

The terminal device 2 is, for example, a computer device such as a smartphone or a tablet terminal. For example, the terminal device 2 requests for a provision of authority to use the mobile object 100 from the management device 10 on the basis of an operation of the user, or acquires information indicating that the use has been permitted.

### [Management device]

The management device 10 grants the user of the terminal device 2 the authority to use the mobile object 100 in response to a request from the terminal device 2, or manages reservations for the use of the mobile object 100. For example, the management device 10 generates and manages schedule information in which identification information of a preregistered user is associated with a date and time of reservations for the use of the mobile object 100.

### [Imaging unit]

The imaging unit 20 is a camera that captures images of a scene in a target area. The imaging unit 20 provides the information providing device 30 with images captured at a specific interval.

### [Information providing device]

The information providing device 30 provides the mobile object 100 with a position of the mobile object 100, an area in which the mobile object 100 moves, and map information about an area surrounding the area. The information providing device 30 may generate a route to a destination of the mobile object 100 in response to a request from the mobile object 100, and provide the generated route to the mobile object 100. Details of the information providing device 30 will be described below.

### [Mobile object]

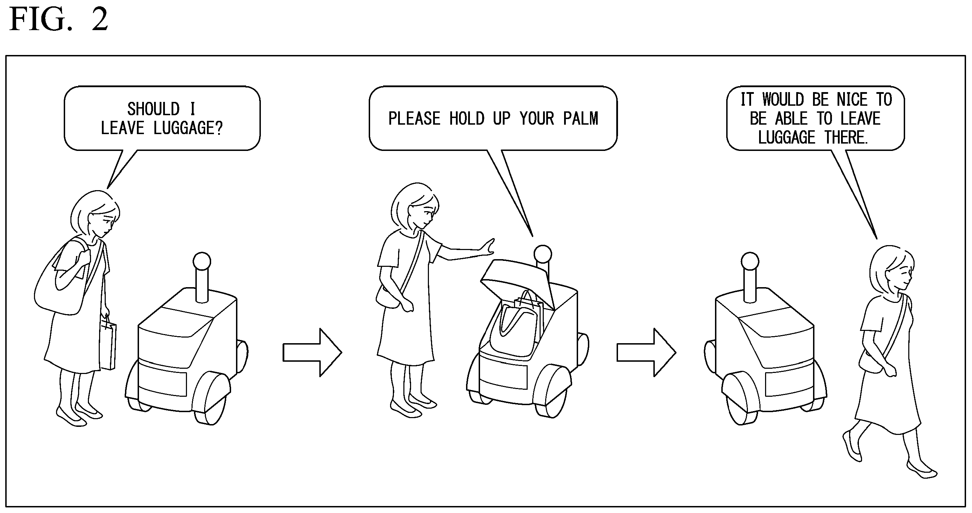

The mobile object 100 is used by a user in the following usage modes. FIG. 2 is a diagram for describing an example of the usage modes of the mobile object 100. The mobile object 100 can move autonomously in areas through which pedestrians can move. The mobile object 100 can pass through, for example, areas through which vehicles cannot pass. The mobile object 100 is disposed, for example, at a specific position in a facility or a town. When a user wants to use the mobile object 100, the user can start using the mobile object 100 by operating an operation unit (not shown) of the mobile object 100, or can start using the mobile object 100 by operating the terminal device 2. For example, when a user goes shopping and has a lot of luggage, the user starts using the mobile object 100 and puts the luggage in a storage section of the mobile object 100. The mobile object 100 then moves together with the user to autonomously follow the user. The user can continue shopping with the luggage stored in the mobile object 100, or move on to a next destination. For example, the mobile object 100 moves together with the user while moving on a sidewalk or a crosswalk on a roadway. The mobile object 100 can move in the areas through which pedestrians can pass, such as roadways and sidewalks. For example, the mobile object 100 may be used in indoor or outdoor facilities or private areas, such as shopping centers, airports, parks, and theme parks, and can move in areas through which pedestrians can pass.

The mobile object 100 may be capable of autonomously moving in modes such as a guidance mode and an emergency mode in addition to (or instead of) a following mode in which it follows a user as described above.

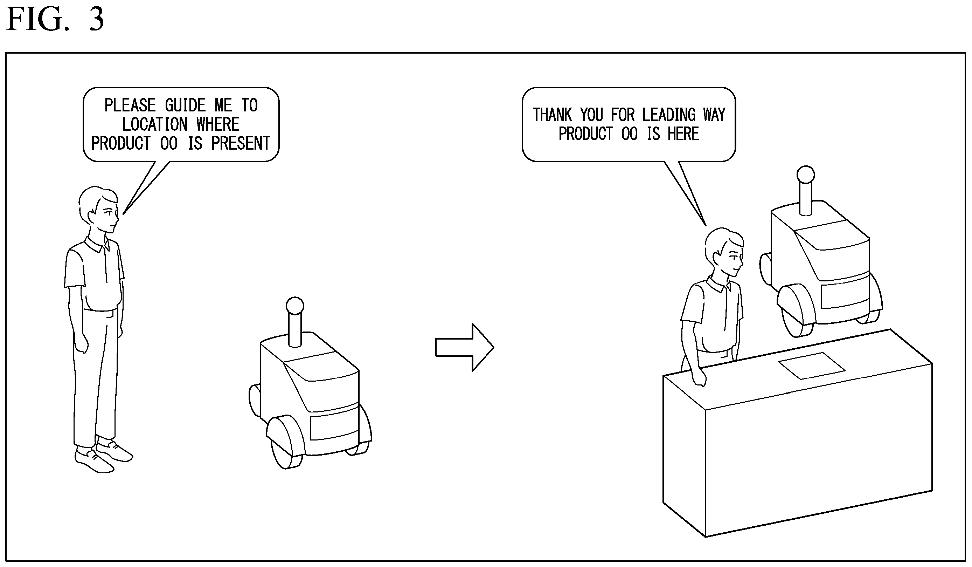

FIG. 3 is a diagram for describing the guidance mode. The guidance mode is a mode in which the mobile object guides the user to a destination designated by the user, and moves autonomously in front of the user at the same speed as a moving speed of the user to lead the user. As shown in FIG. 3, when a user is looking for a specific product in a shopping center and the user requests the mobile object 100 to lead the user to a location of the specific product, the mobile object 100 leads the user to the location of the product. As a result, the user can easily find the specific product. When the mobile object 100 is used in a shopping center, the mobile object 100 or the information providing device 30 stores information in which locations of products, locations of stores, locations of facilities in the shopping center, and the like are associated with map information, and map information of the shopping center. This map information includes detailed map information including widths of roads and passages, and the like.

The emergency mode is a mode in which the mobile object 100 moves autonomously to seek help from nearby people or facilities to help the user, when something unusual happens to the user (for example, when the user falls) while moving with the user. In addition to (or instead of) following or providing guidance as described above, the mobile object 100 may move while maintaining a close distance to the user.

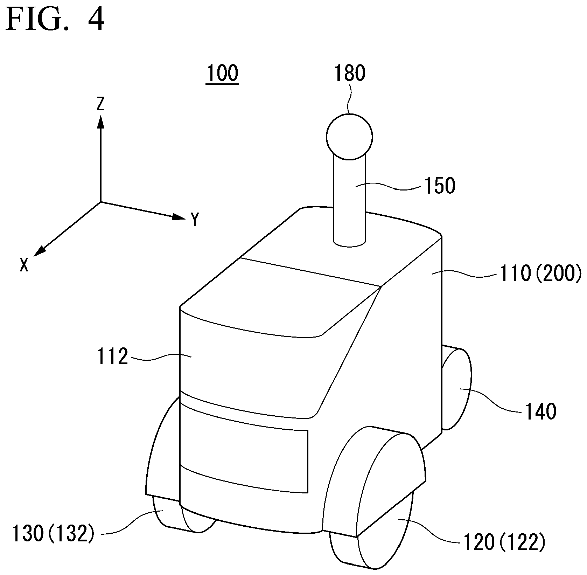

FIG. 4 is a perspective view which shows the mobile object 100. In the following description, a forward direction of the mobile object 100 is a plus x direction, a backward direction of the mobile object 100 is a minus x direction, a width direction of the mobile object 100, which is a left direction based on the plus x direction, is a plus y direction, a right direction is a minus y direction, and a height direction of the mobile object 100, which is orthogonal to the x and y directions, is a plus z direction.

The mobile object 100 includes, for example, a base body 110, a door section 112 provided on the base body 110, and wheels (a first wheel 120, a second wheel 130, and a third wheel 140) attached to the base body 110. For example, a user can open the door section 112 to put luggage into a storage section provided on the base body 110 or take luggage out of the storage section. The first wheel 120 and the second wheel 130 are driving wheels, and the third wheel 140 is an auxiliary wheel (driven wheel). The mobile object 100 may be able to move using a configuration other than wheels, such as an infinite trajectory.

A cylindrical support body 150 extending in the plus z direction is provided on a surface of the base body 110 in the plus z direction. A camera 180 that captures images of a vicinity of the mobile object 100 is provided at an end of the support body 150 in the plus z direction. A position at which the camera 180 is provided may be any position different from the position described above.

The camera 180 is, for example, a camera that can capture images of a vicinity of the mobile object 100 at a wide angle (for example, 360 degrees). The camera 180 may include a plurality of cameras. The camera 180 may be realized by combining, for example, a plurality of 120-degree cameras or a plurality of 60-degree cameras.

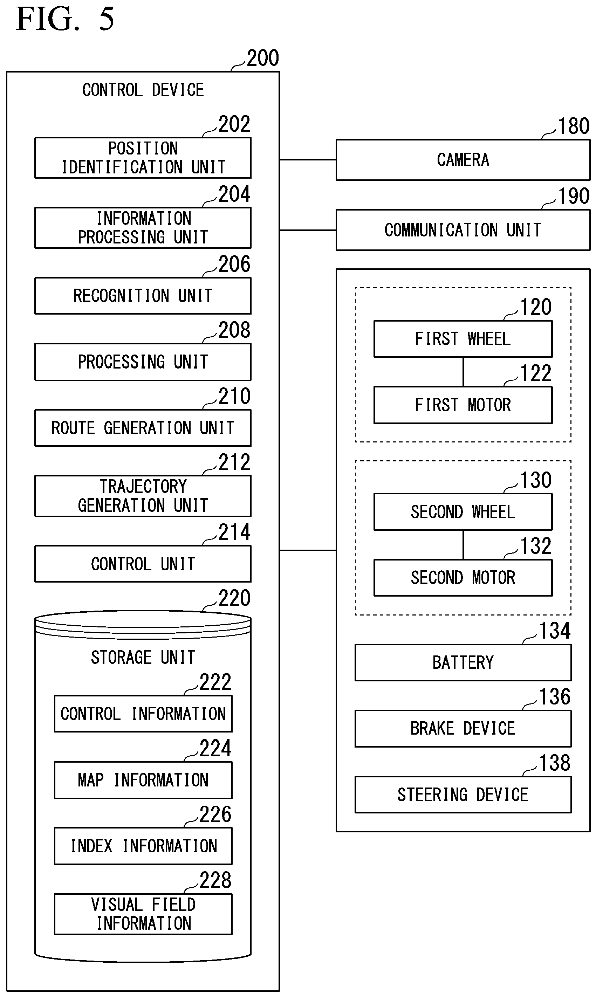

FIG. 5 is a diagram which shows an example of a functional configuration of the mobile object 100. In addition to the functional configuration shown in FIG. 4, the mobile object 100 further includes a first motor 122, a second motor 132, a battery 134, a brake device 136, a steering device 138, a communication unit 190, and a control device 200. The first motor 122 and the second motor 132 are operated by electricity supplied to the battery 134. The first motor 122 drives the first wheel 120, and the second motor 132 drives the second wheel 130. The first motor 122 may be an in-wheel motor provided on a wheel of the first wheel 120, and the second motor 132 may be an in-wheel motor provided on a wheel of the second wheel 130.

The brake device 136 outputs a brake torque to each wheel on the basis of an instruction from the control device 200. The steering device 138 includes an electric motor. The electric motor, for example, applies a force to a rack and pinion mechanism on the basis of an instruction from the control device 200 to change a direction of the first wheel 120 or the second wheel 130, and to change a course of the mobile object 100.

The communication unit 190 is a communication interface for communicating with the terminal device 2, the management device 10, or the information providing device 30.

### [Control device]

The control device 200 includes, for example, a position identification unit 202, an information processing unit 204, a recognition unit 206, a processing unit 208, a route generation unit 210, a trajectory generation unit 212, a control unit 214, and a storage unit 220. The position identification unit 202, the information processing unit 204, the recognition unit 206, the processing unit 208, the route generation unit 210, the trajectory generation unit 212, and the control unit 214 are realized by, for example, a hardware processor such as a central processing unit (CPU) executing a program (software). Some or all of these components may be realized by hardware (a circuit unit; including circuitry) such as a large scale integration (LSI), an application specific integrated circuit (ASIC), a field-programmable gate array (FPGA), or a graphics processing unit (GPU), or may be realized by software and hardware in cooperation. The program may be stored in advance in a storage device (a storage device with a non-transient storage medium) such as a hard disk drive (HDD) or flash memory, or may be stored in a removable storage medium (non-transient storage medium) such as a DVD or CD-ROM, and installed by mounting the storage medium in a drive device. The storage unit 220 is realized by a storage device such as an HDD, flash memory, or a random access memory (RAM). A combination of the processing unit 208 and the control unit 214 is an example of the "control unit."

The storage unit 220 stores control information 222, which is a control program for controlling a behavior of the mobile object 100 referred to by the control unit 214, map information 224, index information 226, and visual field information 228. The map information 224 is, for example, a position of the mobile object 100, an area in which the mobile object 100 moves, and map information about an area surrounding the area provided by the information providing device 30. The index information 226 and the visual field information 228 will be described in detail below. A part or all of the functional constituents included in the control device 200 may be included in another device. For example, the mobile object 100 and other devices may communicate with each other and cooperate to control the mobile object 100.

The position identification unit 202 identifies a position of the mobile object 100. The position identification unit 202 acquires position information of the mobile object 100 by a global positioning system (GPS) device (not shown) embedded in the mobile object 100. The position information may be, for example, two-dimensional map coordinates or latitude and longitude information. The position identification unit 202 may also estimate the position of the mobile object 100 at the same time as creating an environmental map by using a camera image captured by the camera 180 or a method such as a so-called SLAM using a sensor such as a Lidar.

The information processing unit 204 manages information acquired from, for example, the terminal device 2, the management device 10, or the information providing device 30.

The recognition unit 206 recognizes positions (a distance from the mobile object 100 and a direction with respect to the mobile object 100) of objects around the mobile object 100, and states such as speeds and accelerations thereof on the basis of, for example, an image captured by the camera 180. The objects include traffic participants and obstacles within facilities and on roads. The recognition unit 206 recognizes and tracks a user of the mobile object 100. For example, the recognition unit 206 tracks the user on the basis of an image (for example, a facial image of the user) in which the user registered when the user uses the mobile object 100 is captured, or the facial image of the user (or features obtained from the facial image of the user) provided by the terminal device 2 or management device 10. The recognition unit 206 recognizes gestures made by the user. The mobile object 100 may be provided with a detection unit that is different from a camera, such as a radar device or LIDAR. The detection unit may also be provided on an object other than the mobile object 100, a passage, or the like. In this case, the recognition unit 206 recognizes a surrounding situation of the mobile object 100 using a result of detection by the radar device or LIDAR instead of (or in addition to) the image.

When it is estimated that the traffic participant and the mobile object 100 will pass by each other, the processing unit 208 determines a stop position for stopping the mobile object 100 at a stop position so that the mobile object 100 is included in a visual field range of the traffic participant. For example, the processing unit 208 determines, from among a plurality of stop position candidates, a stop position candidate that allows the traffic participant to easily visually recognize the mobile object 100 as the stop position. Details of processing by the processing unit 208 will be described below.

The route generation unit 210 generates a route to a destination designated by a user. The destination may be a location of a product or a location of a facility. **In** this case, the user designates a product or facility, and thereby the mobile object 100 sets the location of the designated product or facility as the destination. The route is a route by which the destination can be reached reasonably. For example, a distance to the destination, a time to reach the destination, an ease of travel of the route, and the like are scored, and a route is derived in which each score and a combined score of the scores are equal to or greater than a threshold value.

The trajectory generation unit 212 generates a trajectory on which the mobile object 100 needs to travel in the future on the basis of, for example, a gesture of the user, a destination set by the user, surrounding objects, a position of the user, and the like. The trajectory generation unit 212 generates a trajectory that allows the mobile object 100 to move smoothly to a target point. The trajectory generation unit 212 generates a trajectory according to the behavior of the mobile object 100 on the basis of, for example, a corresponding relationship between a predetermined gesture and a behavior, or generates a trajectory for heading toward a destination while avoiding surrounding objects. The trajectory generation unit 212 generates, for example, a trajectory for following a user being tracked or a trajectory for leading a user. The trajectory generation unit 212 generates, for example, a trajectory according to the behavior based on a preset mode. The trajectory generation unit 212 generates a plurality of trajectories according to the behavior of the mobile object 100, calculates a risk for each trajectory, and when a total value of the calculated risks and a risk of each trajectory point meet a preset criterion (for example, when the total value is equal to or less than a threshold value Th1 and the risk of each trajectory point is equal to or less than a threshold value Th2), adopts a trajectory that meets the criterion as a trajectory along which the mobile object 100 moves. For example, the risk tends to become higher as a distance between the trajectory (a trajectory point of the trajectory) and an obstacle becomes smaller, and to become lower as the distance between the trajectory and the obstacle becomes greater.

The control unit 214 controls the motors (the first motor 122, the second motor 132), the brake device 136, and the steering device 138 so that the mobile object 100 travels along a trajectory that meets a criterion set in advance.

### [Regarding avoidance control when avoiding object]

The control device 200 controls a mobile object that can move autonomously within an area in which a pedestrian can move. The control device 200 is provided on the mobile object 100 and recognizes a traffic participant (for example, a pedestrian or another traffic participant) that is included in objects around the mobile object 100 and is estimated to pass by the mobile object 100, and a stop position to which the mobile object 100 can be evacuated, and when it is estimated that the traffic participant and the mobile object 100 will pass by each other, the control device stops the mobile object 100 at the stop position so that the mobile object is included in a visual field range of the traffic participant.

The visual field range of the traffic participant is a visual field range when the traffic participant reaches a preset point. The preset point is a reference stop position candidate in a traveling direction of the mobile object 100 or the traffic participant, or a position at a predetermined distance from a current position of the mobile object 100. The reference stop position candidate may be, for example, each of the stop position candidates, or may be an identified stop position candidate (for example, a stop position candidate closest to the traffic participant). When the reference stop position candidate is each of the stop position candidates, it is determined whether the traffic participant can recognize the mobile object 100 in the visual field range corresponding to each of the stop position candidates.

When there are a plurality of traffic participants and a plurality of stop position candidates, the control device 200 determines, as the stop position, a stop position candidate in which the mobile object is included in the visual field range of each of the plurality of traffic participants among the plurality of stop position candidates, and stops the mobile object at the stop position. For example, when other stop position candidates do not include the mobile object 100 in the visual field range of each traffic participant, and a predetermined stop position candidate includes the mobile object 100 in the visual field range of each traffic participant, the control device 200 determines the predetermined stop position candidate as the stop position. The avoidance control described above will be described below.

The avoidance control is executed, for example, when the mobile object 100 stops temporarily. The avoidance control is executed, for example, in a narrow road. A narrow road is a passage where the mobile object 100 needs to move in the width direction or into an area where it can avoid other mobile objects to avoid the other mobile objects when the mobile object 100 passes by the other mobile objects. The avoidance control stops the mobile object 100 in the stop position in this narrow road so that the mobile object 100 is included in the visual field range of the traffic participant.

When it is assumed that the mobile object 100 has stopped at each of the stop position candidates, which are candidates for a plurality of stop positions, the control device 200 may determine, as the stop position, a stop position candidate in which the mobile object 100 is positioned at or near a center of the visual field range in a horizontal direction of the visual field range of each of the stop position candidates. For example, when there are a plurality of traffic participants and a plurality of stop position candidates, the control device 200 determines, as the stop position, a stop position candidate in which the mobile object 100 is included in the visual field range of each of the plurality of traffic participants among the plurality of stop position candidates, and stops the mobile object at the stop position. A stop position candidate in which the mobile object 100 is included in a plurality of visual field ranges among the visual field ranges of each of the plurality of traffic participants, or a stop position candidate in which the mobile object 100 is included in more visual field ranges may be determined as the stop position.

When it is estimated that the traffic participant and the mobile object 100 will pass by each other, the control device 200 may assume that the mobile object 100 has stopped at each of the plurality of stop position candidates, and may determine, among the stop position candidates, a stop position candidate corresponding to a visual field range in which the mobile object 100 is not hidden by an object and a larger portion of the mobile object 100 is included as the stop position. For example, the control device 200 may determine, from among each of the stop position candidates that are candidates for the plurality of stop positions, a stop position such that the mobile object 100 is not hidden by an object and a larger portion of the mobile object 100 is included in the visual field range, and a portion of the mobile object 100 that is not hidden by an object is positioned at the center of the visual field range in the horizontal direction. More specifically, the control device 200 may determine the stop position so that a sum of indexes, which will be described below, is increased.

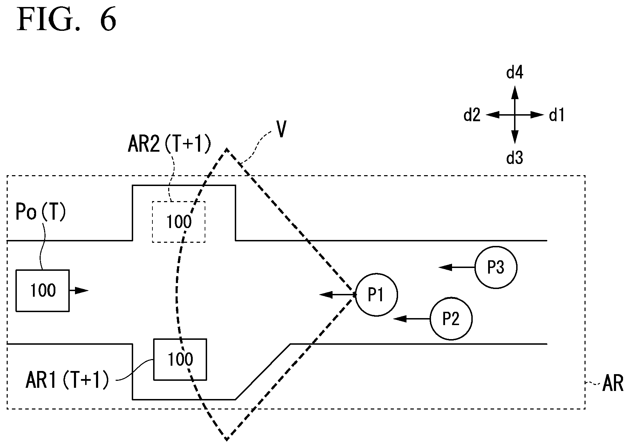

FIG. 6 is a diagram for describing avoidance control. The mobile object 100 is controlled on the basis of an image captured from a ground in the horizontal direction (an XY direction), but for a sake of description, it is described with reference to FIG. 6, which shows the ground from above (from a positive Z direction to a negative Z direction). In the following example, a user that is followed or lead by the mobile object 100 or moves with the mobile object 100 will be omitted.

Hereinafter, a traveling direction of the mobile object 100 is referred to as a direction d1, an opposite direction to the direction d1 is referred to as a direction d2, a direction obtained by rotating the direction d1 by 90 degrees to a right of the horizontal direction is referred to as a direction d3, and an opposite direction to the direction d3 is referred to as a direction d4. The mobile object 100 travels in the direction d1, and pedestrians P1 to P3 (traffic participants) ahead of it are traveling from the direction d1 toward the direction d2. To avoid interference with the pedestrians P1 to P3, the mobile object 100 needs to enter any one of an area AR1 and an area AR2 and wait for the pedestrian P to pass through it. The area AR1 or area AR2 is an example of an "evacuation area."

The area AR1 is positioned on a direction d3 side of a narrow road. The area AR2 is positioned on a direction d4 side of the narrow road. The areas AR1 and AR2 are avoidance areas large enough for the mobile object 100 to enter. Arrows of the traffic participants P1 to P3 in FIG. 6 indicate directions to a center of the visual field ranges of the traffic participants P1 to P3. For example, the visual field range of the traffic participant P1 is a visual field range V in FIG. 6. A wall on the direction d1 side that constitutes the area AR1 does not extend in the direction d4, but is formed at an incline in the direction d1. For this reason, the traffic participant P1 can visually recognize all or most of the area AR1 in the visual field range V. A wall on the direction d1 side that constitutes the area AR2 extends in the direction d4. For this reason, the traffic participant can visually recognize part of the area AR2 in the visual field range V. In other words, when the mobile object 100 is present in the area AR1, the traffic participant P1 can recognize a larger area of the mobile object 100 than when the mobile object 100 is present in the area AR2. This is because when the mobile object 100 is present in the area AR2, the wall on the direction d1 side that constitutes the area AR2 becomes an obstacle to visual recognition, but when the mobile object 100 is present in the area AR1, the wall on the direction d1 side that constitutes the area AR1 does not become an obstacle to visual recognition.

At a time T, the mobile object 100 is positioned at a position Po in front of the area AR1 and the area AR2 in the direction d2. At this time, the mobile object 100 tries to avoid the traffic participants P1 to P3 coming toward the mobile object 100. The control device 200 searches for the areas AR1 and AR2 to which the mobile object 100 can be evacuated in an area AR, which is a search area.

It is assumed that the control device 200 moves the mobile object 100 to each of the areas AR1 and AR2 at a time T+1. The control device 200 estimates the positions of the traffic participants P1 to P3 at the time T+1, and estimates the visual field ranges of each of the traffic participants P1 to P3 on the basis of the estimated positions. For example, a relationship between the positions of the traffic participants and the position of the mobile object 100, which is experimentally obtained in advance, and information indicating the visual field range according to this relationship are stored in the storage unit 220. The control device 200 estimates the visual field range and the position of the mobile object 100 in the visual field range by referring to this information and objects that serve as obstacles (for example, walls, and the like).

In the example of FIG. 6, when the mobile object 100 is positioned in the area AR1, a larger portion of the mobile object 100 can be recognized from the visual field ranges of each of the traffic participants P1 to P3, so that the control device 200 moves the mobile object 100 to the area AR1. The control device 200 may move the mobile object 100 so that the mobile object 100 is stopped slightly outside the area AR1 and positioned on a center side of the visual field range. A position where the mobile object 100 is stopped outside the area AR1 is, for example, a position on the center side of the visual field range that is several tens of centimeters away from a reference position. The position on the center side is, for example, a position in the area AR1 where the mobile object 100 does not interfere with the traffic participants P1 to P3 even if the traffic participants P1 to P3 travel.

### [Flowchart]

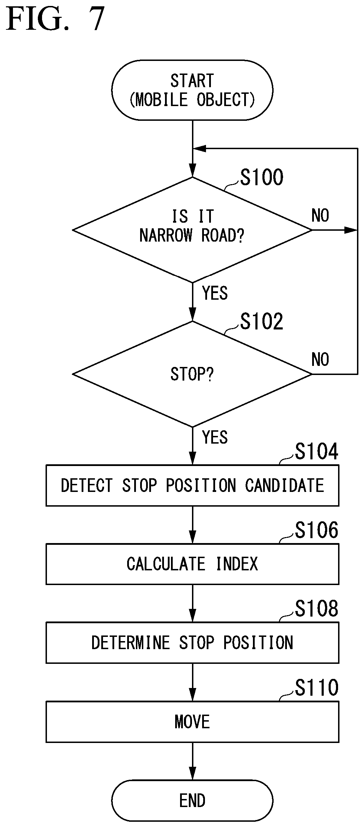

FIG. 7 is a flowchart which shows an example of a flow of processing executed by the control device 200. First, the control device 200 determines whether a passage in which the mobile object 100 is present is a narrow road (step S100). The map information 224 is associated with information indicating whether the passage is a narrow road with respect to position information, an area, or the like. The control device 200 determines whether the passage is a narrow road by referring to the map information 224. The control device 200 may detect a travelable area on the basis of surrounding objects such as walls, and may determine that the travelable area is a narrow road when a width of the detected travelable area is equal to or smaller than a threshold value. The threshold value is defined on the basis of a width of the mobile object 100. In addition, the control device 200 may detect surrounding objects such as traffic participants and obstacles to detect the travelable area, and may determine that the travelable area is a narrow road when the detected travelable area is narrower than an actual area of the passage. When it is determined that it is better to temporarily evacuate the mobile object 100 in a case where the passage is congested or the like, the passage may be determined to be narrow for convenience, even if it is actually wide enough. The determination may be made by, for example, comparing an actual area of the passage with an area of the detected travelable area. Alternatively, the determination may also be made on the basis of the number of obstacles and other traffic participants per unit area.

When the passage in which the mobile object 100 is present is a narrow road, the control device 200 determines whether to stop the mobile object 100 (step S102). For example, the control device 200 determines to stop the mobile object 100 when a future route of the mobile object 100 and a future position of the pedestrian P interfere with or approach each other. For example, the control device 200 derives a risk that the mobile object 100 will approach or interfere with the pedestrian P on the basis of a future route of the mobile object 100, a future position of the pedestrian P, and a predetermined algorithm for deriving the risk of interference, and stops the mobile object 100 when this risk is equal to or greater than a threshold value.

When it is determined to stop the mobile object 100, the control device 200 detects stop position candidates (step S104). The control device 200 predicts the future position of the pedestrian P, and determines, as stop position candidates, positions that will not interfere with the predicted future position of the pedestrian P or will not approach the mobile object 100 by a predetermined amount or more when the mobile object 100 moves.

Next, the control device 200 calculates an index for each of the plurality of stop position candidates (step S106), and determines a stop position on the basis of the calculated index (step S108). Then, the control device 200 moves the mobile object 100 to the stop position (step S110). Details of the processing of steps S106 and S108 will be described below. As a result, processing of one routine of this flowchart will be ended.

Thereafter, when a traffic participant passes by the mobile object 100 and/or the risk of the mobile object 100 approaching or interfering with the pedestrian P becomes less than the threshold value, the control device 200 moves the mobile object 100 from the stop position.

### [Calculation of index]

The control device 200 derives an index for each of the stop position candidates and derives an integrated index by integrating the derived indexes. For example, a stop position candidate with the largest integrated index is determined as the stop position. The control device 200 may input each index into a predetermined function or model to determine the stop position.

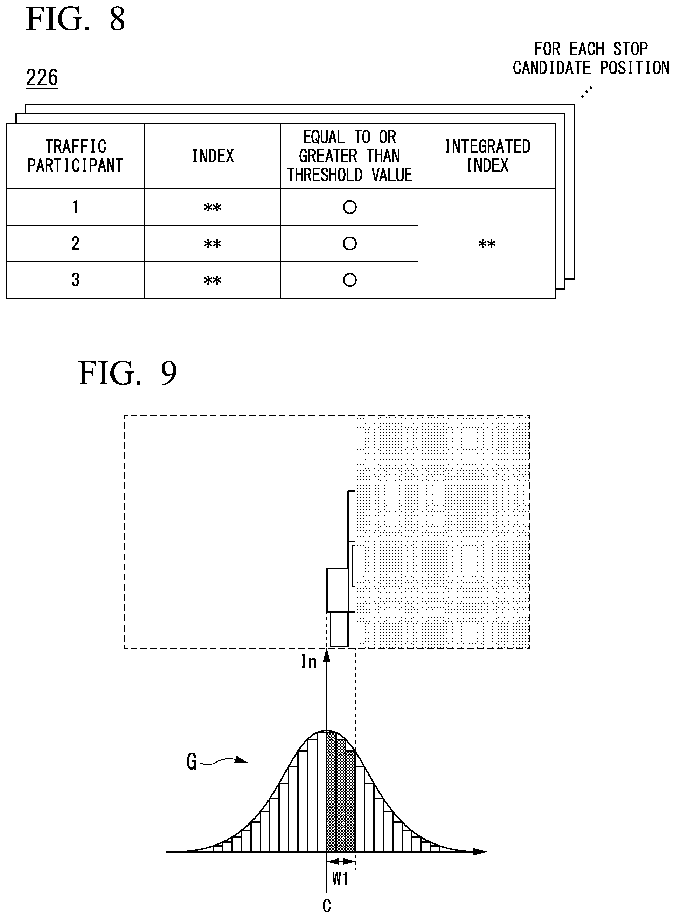

The control device 200 generates index information 226. FIG. 8 is a diagram which shows an example of contents of the index information 226. The index information 226 is information in which an index for each of the traffic participants P1 to P3, information indicating whether each index is equal to or greater than a threshold value, and an integrated index obtained by performing statistical processing (for example, summing) on the plurality of indexes described above are associated with each other. The index information 226 is generated for each stop position candidate. In the index described above, a weight may be assigned to each traffic participant. For example, the index may be adjusted so that an index with a high risk of interference with the mobile object 100 is emphasized. For example, an index with a low risk of interference may be assigned with a small weight. A method of deriving the indexes described above will be described below.

When it is estimated that the traffic participant and the mobile object 100 will pass by each other and there are a plurality of traffic participants, the control device 200 assumes that the mobile object has stopped at each of the plurality of stop position candidates. The control device 200 obtains an index for each of the plurality of traffic participants at each stop position candidate, based on a size of an area in which the mobile object 100 can be recognized without being hidden by an object, in the visual field range of each of the plurality of traffic participants at each stop position candidate. As shown in FIG. 8 described above, the control device 200 assumes that the mobile object 100 is present in area AR1, and identifies the position of the mobile object 100 in the visual field range of each of the traffic participants P1 to P3 at this time. The same will be applied to the area AR2. The control device 200 further determines a stop position candidate with the largest index among the plurality of indexes (integrated indexes) obtained after performing statistical processing on indexes of the plurality of traffic participants at each stop position candidate as the stop position.

When it is estimated that the traffic participant and the mobile object 100 will pass by each other, the control device 200 assumes that the mobile object has stopped at each of the plurality of stop position candidates and determines the stop position on the basis of the visual field information 228 to which an index corresponding to a degree of deviation in a horizontal distance from a horizontal center of the visual field range is associated, and a horizontal position of the mobile object 100 that is not hidden by an object corresponding to each of the stop position candidates in the visual field range. The visual field information 228 has a lower index set as the horizontal distance from the horizontal center of the visual field range increases (refer to G in FIG. 9 to be described below). The control device 200 derives a sum of indexes of the visual field information 228 according to the horizontal position of the mobile object 100 for each of the visual field ranges of the plurality of traffic participants, and determines the stop position by referring to each of the derived sums.

The control device 200 derives an index according to a relationship between the visual field of the traffic participant and the mobile object 100. As the mobile object 100 is closer to the center of the visual field range and the area or portion of the visual field occupied by the user U is larger, the index is derived to be larger. However, an area or portion of the mobile object 100 that is not hidden by an object (the area or portion of the mobile object 100 that can be visually recognized or recognized by the traffic participant) is considered in the calculation of an index.

FIG. 9 is a diagram for describing an index (In) used to derive the index described above. A graph G in FIG. 9 is the visual field information 228 in which an index is associated with each area in the visual field range. The index is highest at or near a center C of the visual field range, and decreases as it deviates from the center. Distribution of the index does not have to be a smooth mountain shape as shown in FIG. 9, but may be a shape in which the index gradually decreases as it deviates from the center C. The distribution of the index may be set so that a predetermined area including the center is different from areas at the ends, or the distribution may be the same for all areas.

The control device 200 assumes, for example, that the mobile object 100 is stopped at each of the stop position candidates. In this assumption, the control device 200 identifies the area of the mobile object 100 reflected in the visual field of the traffic participant. For example, in the example of FIG. 9, most of the mobile object 100 is hidden by an obstacle, and a part of the mobile object 100 is included in the center of the visual field range so that it can be visually recognized. The index at this time is a sum of indexes of width W1 of an area corresponding to the part of the mobile object 100.

Furthermore, the index information 226 may be information in which an index is associated with a vertical position, in addition to (or instead of) information in which an index is associated with a horizontal position. The same index may be associated with each vertical position. The control device 200 identifies the index corresponding to a vertical position of the mobile object 100, and derives a sum of the identified vertical indexes. The control device 200 may determine, as an index to be used for determination, an index which is obtained by performing statistical processing on the derived sum of indexes and a sum of horizontal indexes. As a result, the control device 200 can determine the stop position by further considering the position of the mobile object 100 in the visual field range.

The control device 200 sets a stop position candidate whose integrated index is the maximum as the stop position. More specifically, the control device 200 sets a stop position candidate whose integrated index is the maximum and whose index is not less than a threshold value as the stop position. The control device 200 generates a trajectory from the position of the mobile object 100 to the stop position, and moves the mobile object 100 on the generated trajectory. This trajectory is, for example, a trajectory that allows the mobile object 100 to stop by facing a direction of the user U at the stop position. For example, this trajectory is preferably a trajectory in which the mobile object 100 faces the direction of the traffic participant or user when it has stopped at the stop position instead of a trajectory in which the mobile object 100 stops by facing a direction different from that of the traffic participant or user at the stop position and turns at the stop position to face the direction of the traffic participant or user. As a result, it is possible to realize a control such that the mobile object 100 avoids turning at the stop position, smoothly faces a desired direction, and stops at the stop position.

As described above, when it is estimated that the traffic participant and the mobile object 100 will pass by each other, the control device 200 can determine a stop position according to the environment by stopping the mobile object 100 at the stop position so that the mobile object 100 is included in the visual field range of the traffic participant.

### <Modified example 1>

In the example described above, the control device 200 determines the stop position on the basis of the visual field range when a traffic participant reaches a preset point. In a modified example 1, the control device 200 determines the stop position by considering a future position of the traffic participant.

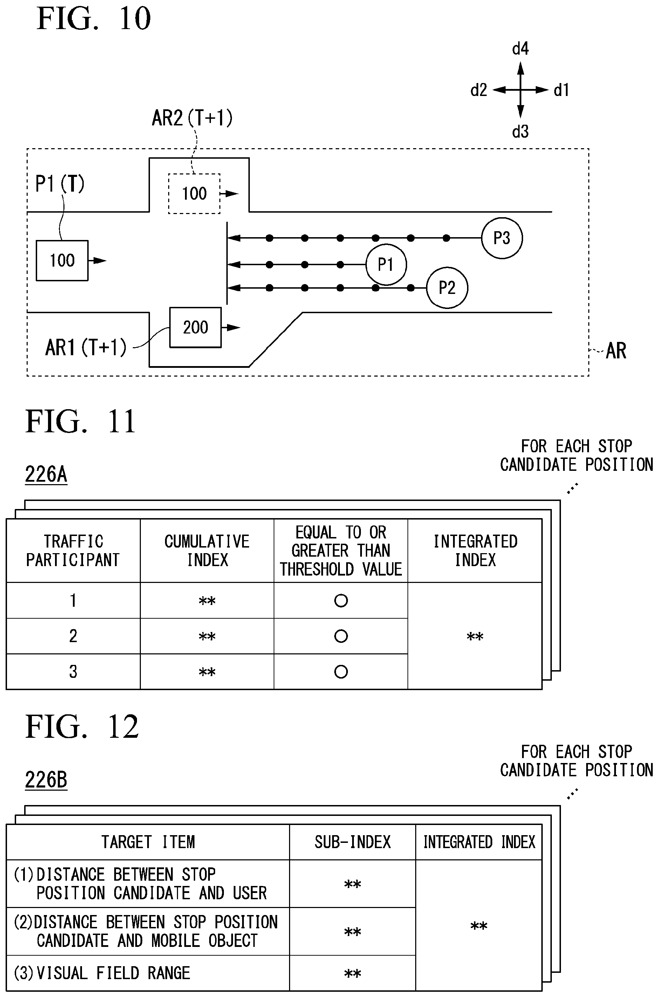

FIG. 10 is a diagram for describing the modified example 1. The control device 200 predicts that the traffic participants P1 to P3 will move in the direction d2 in the future, and predicts positions of the traffic participants P1 to P3 at one or more or a plurality of times in the future (• in FIG. 10). The control device 200 derives a sum of indexes according to visual field ranges corresponding to positions of traffic participants P1 to P3 in the future. The control device 200 accumulates the indexes of the visual field ranges in the future for each traffic participant.

FIG. 11 is a diagram which shows an example of index information 226A of modified example 1 including a cumulative index, which is a cumulated index. The index information 226A is information in which cumulative indexes for positions of each of the traffic participants P1 to P3 at each time, information indicating whether each index is equal to or greater than a threshold value, and an integrated index obtained by performing statistical processing (for example, summing) on the plurality of indexes described above are associated with each other. The index information 226A is generated for each stop position candidate. The control device 200 refers to the index information 226A described above and determines the stop position candidate having the largest integrated index and no cumulative index equal to or less than the threshold value.

As described above, the control device 200 can determine a stop position according to the environment by determining the stop position on the basis of one or more or the plurality of visual field ranges according to the positions of the traffic participants P1 to P3 in the future.

### <Modified example 2>

In the example described above, an index corresponding to the visual field range is considered, but in modified example 2, in addition to this, indexes of other target items are also considered. Corresponding items that are considered are, for example, (1) a distance between the stop position candidates and the user, (2) a distance between the stop position candidates and the mobile object 100, and (3) a visual field range.

FIG. 12 is a diagram for describing index information 226B in modified example 3. The index information 226B is information in which, for example, sub-indexes corresponding to each of the (1) to (3) described above are associated with an integrated index obtained by performing statistical processing on the sub-indexes and integrating the results. The index information 226B is generated for each stop position candidate. The sub-index of the visual field range in the index information 226B is an index obtained on the basis of the visual field range of each traffic participant.

In the (1) described above, for example, as the distance is shorter, the sub-index is derived to be larger. This is because if the distance is longer, cost of reaching a position suitable for following will be high when following is resumed after stopping.

In the above (2), for example, as the distance becomes shorter, the sub-index that is derived is increased. This is because if the distance is longer, it will be more difficult to reach a stop position candidate.

The control device 200 determines the stop position using one or more of the sub-indexes (1) to (3) described above. As a result, the mobile object 100 can stop the mobile object at an appropriate position according to the surrounding situation.

In addition to the sub-indexes (1) to (3) described above, or instead of some of the sub-indexes, (4) cost according to a trajectory may be taken into consideration. (4) The control device 200 derives a sub-index according to a trajectory for stopping at the stop position candidates. When the mobile object 100 has a high degree of difficulty in moving along the trajectory, the sub-index is derived to be small. For example, the sub-index for a trajectory that turns at a sharp angle or makes small turns becomes small.

As described above, the control device 200 can determine a stop position more according to the environment by determining the stop position on the basis of the sub-index described above.

### <Modified example 3>

In the example described above, a behavior of the mobile object 100 after the mobile object 100 moves to the stop position was not taken into consideration. In modified example 3, after the control device 200 moves the mobile object 100 to the stop position or near the stop position, it moves the mobile object 100 in a direction opposite to a direction in which the traffic participant is present with respect to the width direction as the traffic participant approaches the mobile object 100.

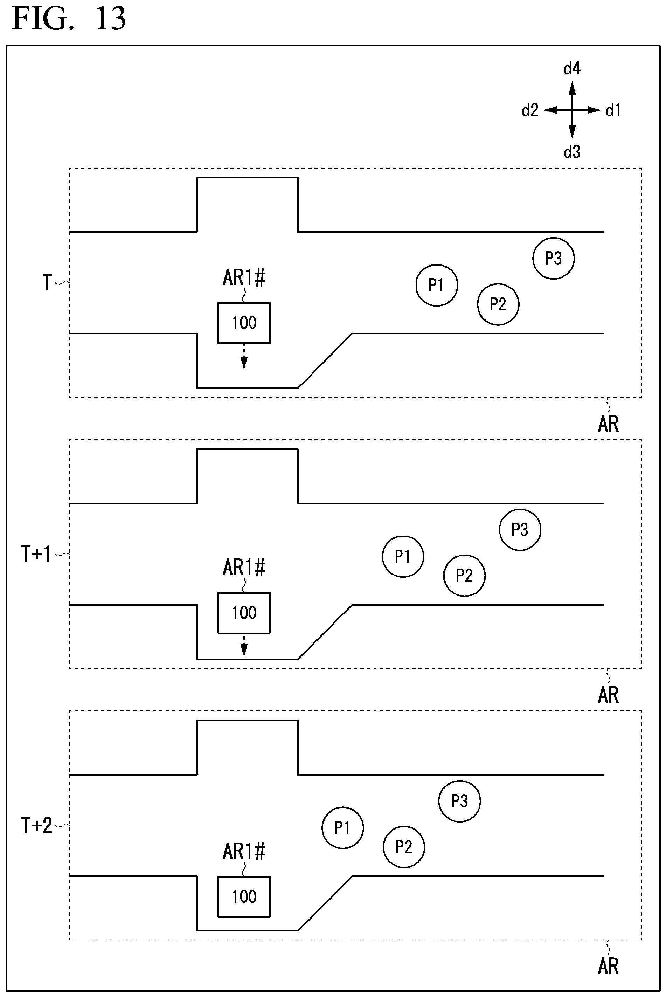

FIG. 13 is a diagram for describing processing of modified example 3. At a time T, it is assumed that the mobile object 100 moves to an area AR1#, which is a stop position. The traffic participants P1 to P3 are traveling in the direction d2. When the traffic participants P1 to P3 are closer to the mobile object 100 at the time T+1 than at the time T, the control device 200 moves the mobile object 100 in the direction d3. When the traffic participants P1 to P3 are closer to the mobile object 100 at a time T+2 than at the time T+1, the control device 200 moves the mobile object 100 further in the direction d3. The position of the mobile object 100 at a time T+3 is a position that does not interfere with the traffic participants P1 to P3 when the traffic participants P1 to P3 pass by the mobile object 100.

As described above, when traffic participants P1 to P3 are positioned far away, the mobile object 100 is positioned at a position where the traffic participants P1 to P3 can recognize most of the mobile object 100, and as traffic participants P1 to P3 approach the mobile object, the mobile object 100 moves away from the traffic participants P1 to P3 little by little in the width direction. As a result, the traffic participants P1 to P3 can recognize the mobile object 100 and can pass by the mobile object 100 smoothly.

The embodiments described above can be expressed as follows.

A control system for controlling a mobile object that is autonomously movable within an area in which a pedestrian can move includes a storage medium that stores computer-readable instructions, one or more processors connected to the storage medium, in which the one or more processors execute the computer-readable instructions to recognize a traffic participant that is estimated to pass by a mobile object included in an object and a stop position to which the mobile object can be evacuated on the basis of a result of detection by a detection unit that detects objects around the mobile object, and stop the mobile object at the stop position so that the mobile object is included in a visual field range of the traffic participant when it is estimated that the traffic participant and the mobile object will pass by each other.

## Claims

1. A control system (1) that controls a mobile object (100) which is capable of autonomously moving in an area in which a pedestrian is able to move, comprising:
a detection unit (180) configured to detect objects around the mobile object (100);
a recognition unit (206) configured to recognize a traffic participant that is estimated to pass by the mobile object (100) included in the objects and a stop position to which the mobile object (100) is able to be evacuated on the basis of a result of the detection by the detection unit (180); and
a control unit (214) configured to stop the mobile object (100) at the stop position so that the mobile object (100) is included in a visual field range (V) of the traffic participant when the traffic participant and the mobile object (100) are estimated to pass by each other,
**characterized in that**
the control unit (214) is configured to determine, when there are a plurality of traffic participants and a plurality of stop position candidates, a stop position candidate in which the mobile object (100) is included in a visual field range (V) of each of the plurality of traffic participants among the plurality of stop position candidates as a stop position, and stop the mobile object (100) at the stop position.

2. The control system (1) according to claim 1,
wherein, when the traffic participant and the mobile object (100) are estimated to pass by each other, the control unit (214) is configured to determine the stop position candidate among the stop position candidates, in which the mobile object (100) is positioned at or near a center of the visual field range (V) in a horizontal direction, as the stop position.

3. The control system (1) according to claim 1,
wherein, when the traffic participant and the mobile object (100) are estimated to pass by each other, the control unit (214) is configured to determine the stop position candidate included among the stop position candidates, corresponding to the visual field range (V) in which the mobile object (100) is not hidden by the objects and a larger portion of the mobile object (100), as the stop position.

4. The control system (1) according to claim 1,
wherein the control unit (214) is configured to:
obtain, when the traffic participant and the mobile object (100) are estimated to pass by each other, there is a plurality of traffic participants, and the mobile object (100) is assumed to have stopped at each of the plurality of stop position candidates, an index for each of the plurality of traffic participants for each of the stop position candidates, based on a size of an area in which the mobile object (100) is recognizable without being hidden by an object in the visual field range (V) of each of the plurality of traffic participants for each of the stop position candidates; and
determine the stop position candidate having the largest index among a plurality of indexes obtained by performing statistical processing on the indexes of the plurality of traffic participants for each of the plurality of stop position candidates as the stop position.

5. The control system (1) according to claim 1,
wherein, when the traffic participant and the mobile object (100) are estimated to pass by each other, the control unit (214) is configured to determine the stop position on the basis of index information in which an index corresponding to a degree of deviation of a horizontal distance from a center of the visual field range (V) in a horizontal direction is associated and a position of the mobile object (100) in the horizontal direction, which is not hidden by the object corresponding to each of the plurality of stop position candidates in the visual field range (V).

6. The control system (1) according to claim 5,
wherein the index information is set to have a lower index as a horizontal distance from the center of the visual field range (V) in the horizontal direction increases, and
wherein the control unit (214) is configured to derive a sum of the indexes of the index information corresponding to the position of the mobile object (100) in the horizontal direction with respect to each of the visual field ranges (V) of a plurality of traffic participants, and determine the stop position by referring to each of the derived sums.

7. The control system (1) according to any one of claims 1 to 6,
wherein the control unit (214) is configured to stop the mobile object (100) at a stop position so that the mobile object (100) is included in the visual field range (V) of the traffic participant on a narrow road where the mobile object (100) needs to move in a width direction to avoid the traffic participant when passing by the traffic participant.

8. The control system (1) according to any one of claims 1 to 6,
wherein the control unit (214) is configured to move the mobile object (100) in a direction opposite to a direction in which the traffic participant is present with respect to a width direction as the traffic participant approaches the mobile object (100) after the mobile object (100) is moved to the stop position or near the stop position.

9. The control system (1) according to any one of claims 1 to 6,
wherein the mobile object (100) is capable of autonomously moving in an area where vehicles cannot move and where pedestrians can move.

10. A control method comprising:
by a computer of a control system (1) that controls a mobile object (100) that is capable of autonomously moving in an area in which a pedestrian is able to move,
recognizing, on the basis of a result of detection by a detection unit (180) that detects objects around the mobile object (100), a traffic participant that is estimated to pass by the mobile object (100) included in the objects and a stop position to which the mobile object (100) is able to be evacuated; and
stopping the mobile object (100) at the stop position so that the mobile object (100) is included in a visual field range (V) of the traffic participant when the traffic participant and the mobile object (100) are estimated to pass by each other;
**characterized by** further comprising
determining, when there are a plurality of traffic participants and a plurality of stop position candidates, a stop position candidate in which a mobile object (100) is included in a visual field range (V) of each of the plurality of traffic participants among the plurality of stop position candidates as a stop position, and stopping the mobile object (100) at the stop position.

11. A non-transitory computer readable storage medium that has stored a program for causing a computer of a control system (1) that controls a mobile object that is capable of autonomously moving in an area in which a pedestrian is able to move to execute:
processing of recognizing, on the basis of a result of detection by a detection unit (180) that detects objects around the mobile object (100), a traffic participant that is estimated to pass by the mobile object (100) included in the objects and a stop position to which the mobile object (100) is able to be evacuated; and
processing of stopping the mobile object (100) at the stop position so that the mobile object (100) is included in a visual field range (V) of the traffic participant when the traffic participant and the mobile object (100) are estimated to pass by each other. each other;
**characterized in that** the computer is further caused to execute
processing of determining, when there are a plurality of traffic participants and a plurality of stop position candidates, a stop position candidate in which a mobile object (100) is included in a visual field range (V) of each of the plurality of traffic participants among the plurality of stop position candidates as a stop position, and stopping the mobile object (100) at the stop position.

## Patentansprüche

1. Ein Steuerungssystem (1) zur Steuerung eines mobilen Objekts (100), das in der Lage ist, sich autonom in einem Fußgängerbereich zu bewegen, aufweisend:
eine Erfassungseinheit (180), ausgebildet, um Objekte in der Umgebung des mobilen Objekts (100) zu erfassen;
eine Erkennungseinheit (206), ausgebildet, um auf der Grundlage eines Ergebnisses der Erfassung durch die Erfassungseinheit (180) einen Verkehrsteilnehmer zu erkennen, von dem abgeschätzt wird, dass er sich an dem in den Objekten enthaltenen mobilen Objekt (100) vorbeibewegt, sowie eine Anhalteposition, an der das mobile Objekt (100) geparkt werden kann; und
eine Steuereinheit (214), ausgebildet, um das mobile Objekt (100) an der Anhalteposition anzuhalten, sodass das mobile Objekt (100) sich in einem Sichtfeldbereich (V) des Verkehrsteilnehmers befindet, wenn abgeschätzt wird, dass sich der Verkehrsteilnehmer und das mobile Objekt (100) aneinander vorbeibewegen,
**dadurch gekennzeichnet, dass**
die Steuereinheit (214) ausgebildet ist, um, wenn mehrere Verkehrsteilnehmer und mehrere mögliche Anhaltepositionen vorhanden sind, unter den mehreren möglichen Anhaltepositionen eine mögliche Anhalteposition zu bestimmen, an der das mobile Objekt (100) sich im Sichtfeldbereich (V) jedes der mehreren Verkehrsteilnehmer befindet, und das mobile Objekt (100) an dieser Anhalteposition anhält.

2. Das Steuerungssystem (1) nach Anspruch 1,
wobei, wenn abgeschätzt wird, dass sich der Verkehrsteilnehmer und das mobile Objekt (100) aneinander vorbeibewegen, die Steuereinheit (214) so ausgebildet ist, dass sie unter den möglichen Anhaltepositionen jene mögliche Anhalteposition als Anhalteposition bestimmt, bei der sich das mobile Objekt (100) in horizontaler Richtung in der Mitte oder nahe der Mitte des Sichtfeldbereichs (V) befindet.

3. Das Steuerungssystem (1) nach Anspruch 1,
wobei, wenn abgeschätzt wird, dass sich der Verkehrsteilnehmer und das sich bewegende Objekt (100) aneinander vorbeibewegen, die Steuereinheit (214) so ausgebildet ist, dass sie die unter den möglichen Anhaltepositionen enthaltene mögliche Anhalteposition, die dem Sichtfeldbereich (V) entspricht, in dem das sich bewegende Objekt (100) nicht durch die Objekte verdeckt ist und ein größerer Teil des sich bewegenden Objekts (100) sichtbar ist, als Anhalteposition bestimmt.

4. Das Steuerungssystem (1) nach Anspruch 1,
wobei die Steuereinheit (214) ausgebildet ist, um,
wenn abgeschätzt wird, dass sich der Verkehrsteilnehmer und das mobile Objekt (100) aneinander vorbeibewegen und es eine Mehrzahl an Verkehrsteilnehmern gibt, wobei angenommen wird, dass das mobile Objekt (100) an jeder der mehreren möglichen Anhaltepositionen angehalten hat, für jeden der mehreren Verkehrsteilnehmer für jede der möglichen Anhaltepositionen einen Index zu ermitteln, basierend auf der Größe eines Bereichs, in dem das mobile Objekt (100) erkennbar ist, ohne von einem Objekt im Sichtfeldbereich (V) jedes der mehreren Verkehrsteilnehmer für jede der möglichen Anhaltepositionen verdeckt zu werden; und
um die mögliche Anhalteposition mit dem höchsten Indexwert aus einer Mehrzahl an Indizes, die durch statistische Auswertung der Indizes der mehreren Verkehrsteilnehmern für jede der mehreren möglichen Anhaltepositionen ermittelt wurden, als Anhalteposition festzulegen.

5. Das Steuerungssystem (1) nach Anspruch 1,
wobei, wenn abgeschätzt wird, dass sich der Verkehrsteilnehmer und das mobile Objekt (100) aneinander vorbeibewegen, die Steuereinheit (214) so ausgebildet ist, dass sie die Anhalteposition auf der Grundlage von Indexinformation bestimmt, wobei jeder der mehreren möglichen Anhaltepositionen im Sichtfeldbereich (V) ein Index zugeordnet ist, der dem Grad der Abweichung eines horizontalen Abstands von der Mitte des Sichtfeldbereichs (V) in horizontaler Richtung entspricht, sowie eine Position des mobilen Objekts (100) in horizontaler Richtung, die nicht durch das den mehreren möglichen Anhaltepositionen im Sichtfeldbereich (V) entsprechende Objekt verdeckt wird.

6. Das Steuerungssystem (1) nach Anspruch 5,
wobei die Indexinformation so festgelegt ist, dass ihr Index mit zunehmendem horizontalen Abstand vom Mittelpunkt des Sichtfeldbereichs (V) in horizontaler Richtung abnimmt, und
wobei die Steuereinheit (214) ausgebildet ist, um eine Summe der Indizes der Indexinformation abzuleiten, die der Position des sich bewegenden Objekts (100) in horizontaler Richtung in Bezug auf jeden der Sichtfeldbereiche (V) mehrerer Verkehrsteilnehmer entspricht, und die Anhalteposition unter Bezugnahme auf jede der abgeleiteten Summen bestimmt.

7. Das Steuerungssystem (1) nach einem der Ansprüche 1 bis 6,
wobei die Steuereinheit (214) so ausgebildet ist, dass sie das mobile Objekt (100) an einer Anhalteposition anhält, sodass das mobile Objekt (100) in den Sichtfeldbereich (V) des Verkehrsteilnehmers auf einer schmalen Straße fällt, auf der sich das mobile Objekt (100) in Breitenrichtung bewegen muss, um dem Verkehrsteilnehmer beim sich Vorbeibewegen auszuweichen.

8. Das Steuerungssystem (1) nach einem der Ansprüche 1 bis 6,
wobei die Steuereinheit (214) so ausgebildet ist, dass sie das mobile Objekt (100) in einer Richtung entgegengesetzt zu der Richtung, in der sich der Verkehrsteilnehmer in Breitenrichtung befindet, bewegt, wenn sich der Verkehrsteilnehmer dem mobilen Objekt (100) nähert, nachdem das mobile Objekt (100) in die Anhalteposition oder in die Nähe der Anhalteposition bewegt wurde.

9. Das Steuerungssystem (1) nach einem der Ansprüche 1 bis 6,
wobei sich das mobile Objekt (100) autonom in einem Bereich bewegen kann, in dem keine Fahrzeuge fahren, Fußgänger sich jedoch bewegen können.

10. Ein Steuerungsverfahren, umfassend:
durch einen Computer eines Steuerungssystems (1), das ein mobiles Objekt (100) steuert, welches in der Lage ist, sich autonom in einem Bereich zu bewegen, in dem sich ein Fußgänger bewegen kann,
Erkennen, auf der Grundlage eines Erfassungsergebnisses einer Erfassungseinheit (180), welche Objekte in der Umgebung des mobilen Objekts (100) erfasst, eines Verkehrsteilnehmers, von dem abgeschätzt wird, dass er sich an dem mobilen Objekt (100) vorbeibewegt, das zu den Objekten gehört, sowie einer Anhalteposition, in der das mobile Objekt (100) geparkt werden kann; und
Anhalten des mobilen Objekts (100) an der Anhalteposition, sodass das mobile Objekt (100) sich in einem Sichtfeldbereich (V) des Verkehrsteilnehmers befindet, wenn abgeschätzt wird, dass sich der Verkehrsteilnehmer und das mobile Objekt (100) aneinander vorbeibewegen;
**gekennzeichnet durch** den weiteren Schritt:
Bestimmen, wenn mehrere Verkehrsteilnehmer und mehrere mögliche Anhaltepositionen vorhanden sind, einer möglichen Anhalteposition aus den mehreren möglichen Anhaltepositionen, als Anhalteposition, an der ein mobiles Objekt (100) sich in einem Sichtfeldbereich (V) jedes der mehreren Verkehrsteilnehmer befindet, und Anhalten des mobilen Objekts (100) an der Anhalteposition.

11. Ein nichtflüchtiges, computerlesbares Speichermedium, auf dem ein Programm gespeichert ist, das einen Computer eines Steuerungssystems (1), welches ein sich autonom in einem Fußgängerbereich bewegendes mobiles Objekt steuert, dazu veranlasst, Folgendes auszuführen:
Erkennen, auf der Grundlage eines Erfassungsergebnisses einer Objekte in der Umgebung des mobilen Objekts (100) erfassenden Erfassungseinheit (180), eines Verkehrsteilnehmers, von dem abgeschätzt wird, dass er sich an dem in den Objekten enthaltenen mobilen Objekt (100) vorbeibewegt, sowie einer Anhalteposition, an der das mobile Objekt (100) geparkt werden kann; und
Anhalten des mobilen Objekts (100) an der Anhalteposition, sodass das mobile Objekt (100) sich in einem Sichtfeldbereich (V) des Verkehrsteilnehmers befindet, wenn abgeschätzt wird, dass sich der Verkehrsteilnehmer und das mobile Objekt (100) aneinander vorbeibewegen;
**dadurch gekennzeichnet, dass**
der Computer ferner veranlasst wird, Folgendes auszuführen:
wenn mehrere Verkehrsteilnehmer und mehrere mögliche Anhaltepositionen vorhanden sind, unter den mehreren möglichen Anhaltepositionen eine mögliche Anhalteposition zu bestimmen, bei der ein mobiles Objekt (100) sich in einem Sichtfeldbereich (V) jedes der mehreren Verkehrsteilnehmer befindet, und das mobile Objekt (100) an der Anhalteposition anzuhalten.

## Revendications

1. Système de commande (1) qui commande un objet mobile (100) qui est capable de se déplacer de manière autonome dans une zone dans laquelle un piéton est apte à se déplacer, comportant :
une unité de détection (180) configurée pour détecter des objets autour de l'objet mobile (100) ;
une unité de reconnaissance (206) configurée pour reconnaître un participant à la circulation qui est estimé passer au niveau de l'objet mobile (100) inclus dans les objets et une position d'arrêt vers laquelle l'objet mobile (100) est apte à être évacué sur la base d'un résultat de la détection par l'unité de détection (180) ; et
une unité de commande (214) configurée pour arrêter l'objet mobile (100) à la position d'arrêt de sorte que l'objet mobile (100) soit inclus dans une plage de champ visuel (V) du participant à la circulation lorsque le participant à la circulation et l'objet mobile (100) sont estimés passer l'un au niveau de l'autre,
**caractérisé en ce que**
l'unité de commande (214) est configurée pour déterminer, lorsqu'il existe une pluralité de participants à la circulation et une pluralité de positions d'arrêt candidates, une position d'arrêt candidate dans laquelle l'objet mobile (100) est inclus dans une plage de champ visuel (V) de chacun de la pluralité de participants à la circulation parmi la pluralité de positions d'arrêt candidates en tant que position d'arrêt, et arrêter l'objet mobile (100) à la position d'arrêt.

2. Système de commande (1) selon la revendication 1,
dans lequel, lorsque le participant à la circulation et l'objet mobile (100) sont estimés passer l'un au niveau de l'autre, l'unité de commande (214) est configurée pour déterminer la position d'arrêt candidate parmi les positions d'arrêt candidates, où l'objet mobile (100) est positionné au niveau ou à proximité d'un centre de la plage de champ visuel (V) dans une direction horizontale, en tant que position d'arrêt.

3. Système de commande (1) selon la revendication 1,
dans lequel, lorsque le participant à la circulation et l'objet mobile (100) sont estimés passer l'un au niveau de l'autre, l'unité de commande (214) est configurée pour déterminer la position d'arrêt candidate incluse parmi les positions d'arrêt candidates, correspondant à la plage de champ visuel (V) dans laquelle l'objet mobile (100) n'est pas caché par les objets et une partie plus grande de l'objet mobile (100), en tant que position d'arrêt.

4. Système de commande (1) selon la revendication 1,
dans lequel l'unité de commande (214) est configurée pour :
obtenir, lorsque le participant à la circulation et l'objet mobile (100) sont estimés passer l'un au niveau de l'autre, qu'il existe une pluralité de participants à la circulation, et que l'objet mobile (100) est supposé s'être arrêté à chacune de la pluralité de positions d'arrêt candidates, un indice pour chacun de la pluralité de participants à la circulation pour chacune des positions d'arrêt candidates, sur la base d'une taille d'une zone dans laquelle l'objet mobile (100) est reconnaissable sans être caché par un objet dans la plage de champ visuel (V) de chacun de la pluralité de participants à la circulation pour chacune des positions d'arrêt candidates ; et
déterminer la position d'arrêt candidate ayant le plus grand indice parmi une pluralité d'indices obtenus en effectuant un traitement statistique sur les indices de la pluralité de participants à la circulation pour chacune de la pluralité de positions d'arrêt candidates en tant que position d'arrêt.

5. Système de commande (1) selon la revendication 1,
dans lequel, lorsque le participant à la circulation et l'objet mobile (100) sont estimés passer l'un au niveau de l'autre, l'unité de commande (214) est configurée pour déterminer la position d'arrêt sur la base d'informations d'indice dans lesquelles un indice correspondant à un degré d'écart d'une distance horizontale par rapport à un centre de la plage de champ visuel (V) dans une direction horizontale est associé et d'une position de l'objet mobile (100) dans la direction horizontale, qui n'est pas cachée par l'objet correspondant à chacune de la pluralité de positions d'arrêt candidates dans la plage de champ visuel (V).

6. Système de commande (1) selon la revendication 5,
dans lequel les informations d'indice sont établies pour avoir un indice inférieur lorsqu'une distance horizontale par rapport au centre de la plage de champ visuel (V) dans la direction horizontale augmente, et
dans lequel l'unité de commande (214) est configurée pour dériver une somme des indices des informations d'indice correspondant à la position de l'objet mobile (100) dans la direction horizontale par rapport à chacune des plages de champ visuel (V) d'une pluralité de participants à la circulation, et déterminer la position d'arrêt en se référant à chacune des sommes dérivées.

7. Système de commande (1) selon l'une quelconque des revendications 1 à 6,
dans lequel l'unité de commande (214) est configurée pour arrêter l'objet mobile (100) au niveau d'une position d'arrêt de sorte que l'objet mobile (100) soit inclus dans la plage de champ visuel (V) du participant à la circulation sur une route étroite où l'objet mobile (100) doit se déplacer dans une direction de largeur pour éviter le participant à la circulation lors du passage au niveau du participant à la circulation.

8. Système de commande (1) selon l'une quelconque des revendications 1 à 6,
dans lequel l'unité de commande (214) est configurée pour déplacer l'objet mobile (100) dans une direction opposée à une direction dans laquelle le participant à la circulation est présent par rapport à une direction de largeur lorsque le participant à la circulation s'approche de l'objet mobile (100) après que l'objet mobile (100) est déplacé vers la position d'arrêt ou près de la position d'arrêt.

9. Système de commande (1) selon l'une quelconque des revendications 1 à 6,
dans lequel l'objet mobile (100) est capable de se déplacer de manière autonome dans une zone où des véhicules ne peuvent pas se déplacer et où des piétons peuvent se déplacer.

10. Procédé de commande comportant :
par un ordinateur d'un système de commande (1) qui commande un objet mobile (100) qui est apte à se déplacer de manière autonome dans une zone dans laquelle un piéton est apte à se déplacer,
la reconnaissance, sur la base d'un résultat de détection par une unité de détection (180) qui détecte des objets autour de l'objet mobile (100), d'un participant à la circulation qui est estimé passer au niveau de l'objet mobile (100) inclus dans les objets et d'une position d'arrêt vers laquelle l'objet mobile (100) est apte à être évacué ; et
l'arrêt de l'objet mobile (100) à la position d'arrêt de sorte que l'objet mobile (100) soit inclus dans une plage de champ visuel (V) du participant à la circulation lorsque le participant à la circulation et l'objet mobile (100) sont estimés passer l'un au niveau de l'autre ;
**caractérisé en ce qu'**il comporte en outre
la détermination, lorsqu'il existe une pluralité de participants à la circulation et une pluralité de positions d'arrêt candidates, d'une position d'arrêt candidate dans laquelle un objet mobile (100) est inclus dans une plage de champ visuel (V) de chacun de la pluralité de participants à la circulation parmi la pluralité de positions d'arrêt candidates en tant que position d'arrêt, et l'arrêt de l'objet mobile (100) à la position d'arrêt.

11. Support de stockage non transitoire lisible par ordinateur stockant un programme pour amener un ordinateur d'un système de commande (1) qui commande un objet mobile qui est capable de se déplacer de manière autonome dans une zone dans laquelle un piéton est apte à se déplacer à exécuter :
le traitement de la reconnaissance, sur la base d'un résultat de détection par une unité de détection (180) qui détecte des objets autour de l'objet mobile (100), d'un participant à la circulation qui est estimé passer au niveau de l'objet mobile (100) inclus dans les objets et d'une position d'arrêt vers laquelle l'objet mobile (100) est apte à être évacué ; et
le traitement de l'arrêt de l'objet mobile (100) à la position d'arrêt de sorte que l'objet mobile (100) soit inclus dans une plage de champ visuel (V) du participant à la circulation lorsque le participant à la circulation et l'objet mobile (100) sont estimés passer l'un au niveau de l'autre ;
**caractérisé en ce que** l'ordinateur est en outre amené à exécuter
le traitement de la détermination, lorsqu'il existe une pluralité de participants à la circulation et une pluralité de positions d'arrêt candidates, d'une position d'arrêt candidate dans laquelle un objet mobile (100) est inclus dans une plage de champ visuel (V) de chacun de la pluralité de participants à la circulation parmi la pluralité de positions d'arrêt candidates en tant que position d'arrêt, et l'arrêt de l'objet mobile (100) à la position d'arrêt.
